# EUROPÄISCHE PATENTSCHRIFT

(11) **EP 2 916 038 B1**
(45) Veröffentlichungstag und Bekanntmachung des Hinweises auf die Patenterteilung: **28.08.2019**
(21) Anmeldenummer: 14197865.0
(22) Anmeldetag: 15.12.2014
(51) Int. Cl.: F16H 3/66, B61C 9/26, F16H 37/04, B61C 9/00

(54) **Mehrstufengetriebe**
Multi-speed gearbox
Démultiplicateur à plusieurs étages

(30) Priorität: 17.01.2014 DE 102014200860
(43) Veröffentlichungstag der Anmeldung: 09.09.2015
(73) Patentinhaber: ZF Friedrichshafen AG, 88046 Friedrichshafen (DE)
(72) Erfinder: Fellmann, Martin, 88045 Friedrichshafen (DE); Beck, Stefan, 88097 Eriskirch (DE)

(56) Entgegenhaltungen:
- CN-A- 1 776 253
- DE-A1-102013 224 232

## Beschreibung

Die Erfindung betrifft ein Mehrstufengetriebe, insbesondere ein Automatgetriebe für ein Schienenfahrzeug, umfassend mehrere Planetenradsätze, welche in einem Gehäuse aufgenommen und über welche unterschiedliche Übersetzungsverhältnisse zwischen einer Antriebswelle und einer Abtriebswelle durch selektive Betätigung von Schaltelementen darstellbar sind, wobei die Übersetzungsverhältnisse einander entsprechende Anzahlen an darstellbaren Vorwärtsgängen und darstellbaren Rückwärtsgängen bilden. Des Weiteren betrifft die Erfindung einen Antriebsstrang eines Fahrzeuges, welcher ein vorgenanntes Mehrstufengetriebe umfasst.

Bei bestimmten Fahrzeugen, welche keine bevorzugte Fahrtrichtung aufweisen, wie beispielsweise Schienenfahrzeuge und auch einige Arbeitsmaschinen, sind für Vorwärts- und Rückwärtsfahrt gleiche Fahrleistungen bereitzustellen. Dies resultiert in einander entsprechenden Anzahlen an Vorwärts- und Rückwärtsgängen, wobei sich dabei dann je ein Vorwärtsgang und je ein Rückwärtsgang vom Betrag her in ihrem Übersetzungsverhältnis im Wesentlichen entsprechen. Eine gängige, insbesondere bei Schienenfahrzeugen zur Anwendung kommende Möglichkeit ist dabei, einem Hauptgetriebe einen Wendesatz nachzuschalten, über welchen die durch das Hauptgetriebe darstellbaren Übersetzungsverhältnisse entweder als Vorwärtsgänge durchgeschaltet oder unter Realisierung einer Drehrichtungsumkehr als Rückwärtsgänge auf nachfolgende Komponenten des Antriebsstranges übersetzt werden. Als Alternative zu der Verwendung eines Wendesatzes kommen vereinzelt aber auch Mehrstufengetriebe in Antriebssträngen von Schienenfahrzeugen oder Arbeitsmaschinen zum Einsatz, welche von vornherein dazu in der Lage sind, einander entsprechende Anzahlen an Vorwärts- und Rückwärtsgängen zu realisieren.

Aus der DE 26 08 695 A1 und der CN 1 776 253 A geht jeweils ein Mehrstufengetriebe in Planetenbauweise hervor, welches mehrere Planetenradsätze umfasst, wobei die Planetenradsätze in einem Gehäuse aufgenommen sind und der Darstellung unterschiedlicher Übersetzungsverhältnisse zwischen einer Antriebswelle und einer Abtriebswelle durch selektive Betätigung von Schaltelementen dienen. Dabei bilden die Übersetzungsverhältnisse eine einander entsprechende Anzahl an darstellbaren Vorwärtsgängen und darstellbaren Rückwärtsgängen.

Ausgehend vom vorstehend beschriebenen Stand der Technik ist es nun die Aufgabe der vorliegenden Erfindung, ein Mehrstufengetriebe zu schaffen, mittels welchem auf möglichst kompakte Art und Weise gleiche Fahrleistungen für eine Vorwärts- und eine Rückwärtsfahrt realisiert werden können.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder.

Gemäß der Erfindung umfasst ein Mehrstufengetriebe mehrere Planetenradsätze, welche in einem Gehäuse aufgenommen und über die unterschiedlichen Übersetzungsverhältnisse zwischen einer Antriebswelle und einer Abtriebswelle durch selektive Betätigung von Schaltelementen darstellbar sind. Dabei bilden die Übersetzungsverhältnisse einander entsprechende Anzahlen an darstellbaren Vorwärtsgängen und darstellbaren Rückwärtsgängen.

Ein erfindungsgemäßes Mehrstufengetriebe ist bevorzugt in Planetenbauweise ausgeführt, d. h. es setzt sich lediglich aus den mehreren Planetenradsätzen zusammen. Es ist im Rahmen der Erfindung jedoch auch denkbar, dass ein erfindungsgemäßes Mehrstufengetriebe neben Planetenradsätzen anderweitige Übersetzungsstufen, wie beispielsweise Stirnradstufen, umfasst.

Die Planetenradsätze sind alle jeweils als Minusplanetenradsatz ausgeführt, bei welchen ein jeweiliger Planetenträger mindestens ein Planetenrad führt, wobei das mindestens eine Planetenrad dann sowohl mit einem jeweiligen, radial innenliegenden Sonnenrad als auch mit einem jeweiligen, radial umliegenden Hohlrad im Zahneingriff steht. Im Sinne der Erfindung können aber alle Planetenradsätze auch als Plusplanetenradsätze realisiert sein, bei welchen ein jeweiliger Planetenträger mindestens ein Planetenradpaar trägt, wobei bei dem mindestens einen Planetenradpaar eines der Planetenräder mit einem jeweiligen Sonnenrad und ein Planetenrad mit einem jeweiligen Hohlrad kämmt, sowie beide Planetenräder des jeweiligen Paares untereinander im Zahneingriff stehen.

Besonders bevorzugt ist ein erfindungsgemäßes Mehrstufengetriebe Teil eines Antriebsstrangs eines Fahrzeuges, bei welchem es sich insbesondere um ein Schienenfahrzeug oder auch eine Arbeitsmaschine mit keiner bevorzugten Fahrtrichtung handelt. Dabei dient das Mehrstufengetriebe dann der Bereitstellung gleicher Fahrleistungen für Vorwärts- und Rückwärtsfahrt. Bei Anwendung im Bereich eines Schienenfahrzeuges ist das erfindungsgemäße Mehrstufengetriebe, dabei insbesondere seitens eines Wagenkastens des Schienenfahrzeuges platziert und steht mit nachfolgenden Komponenten des Antriebsstranges, insbesondere in Form von Radsatzgetrieben seitens eines Drehgestells, über eine Gelenkwelle in Verbindung.

Zur Erhöhung der Anzahl an darstellbaren Gängen können dem erfindungsgemäßen Mehrstufengetriebe innerhalb des Antriebsstranges zudem eine Splitgruppe und/oder eine Bereichsgruppe vor- oder nachgeschaltet sein. Dabei kann eine derartige Getriebegruppe mit in das Gehäuse des erfindungsgemäßen Mehrstufengetriebes integriert sein oder aber als Einzelgetriebe mit separatem Gehäuse vorliegen, wobei im letztgenannten Fall ein Aufhängen der jeweiligen Getriebegruppe am an einem Hauptgetriebegehäuse oder eine gemeinsame Befestigung an einem Rahmen denkbar ist. Untereinander können die Getriebegruppen dann direkt oder über zwischenliegende elastische Kupplungen oder Gelenkwellen verbunden sein.

Je nachdem, ob das erfindungsgemäße Mehrstufengetriebe Teil eines Gruppengetriebes ist, kann das Mehrstufengetriebe innerhalb des Antriebsstranges über seine Antriebswelle unmittelbar mit einer Antriebsmaschine des Fahrzeuges oder aber mittelbar über eine vorgeschaltete Getriebegruppe mit der Antriebsmaschine in Verbindung gebracht werden, wobei die Verbindung dabei insbesondere über ein Anfahrelement hergestellt werden kann, bei welchem es sich beispielsweise um einen hydrodynamischen Drehmomentwandler, eine hydrodynamische Kupplung, eine separate Anfahrkupplung, eine in das Getriebe integrierte Anfahrkupplung, eine zusätzliche Elektromaschine, etc. handelt. Hingegen ist über die Abtriebswelle ggf. mittels einer nachgeschalteten Getriebegruppe eine Verbindung zu auf das Getriebe folgenden Komponenten des Antriebsstranges hergestellt.

Die Erfindung umfasst nun die technische Lehre, dass ein Sonnenrad eines ersten Planetenradsatzes mit der Antriebswelle und ein Hohlrad des ersten Planetenradsatzes mit der Abtriebswelle verbunden ist, wohingegen ein Planetenträger des ersten Planetenradsatzes mit einem Hohlrad eines zweiten Planetenradsatzes gekoppelt ist. Ferner steht ein Sonnenrad des zweiten Planetenradsatzes mit mindestens einem weiteren Planetenradsatz in Verbindung, während ein Planetenträger des zweiten Planetenradsatzes einerseits zur Darstellung der Rückwärtsgänge über ein erstes Schaltelement am Gehäuse festgesetzt und andererseits zur Darstellung der Vorwärtsgänge mittels eines zweiten Schaltelements drehfest mit der Abtriebswelle verbunden werden kann.

Die Ausführung eines Mehrstufengetriebes mit Planetenradsätzen hat generell den Vorteil, dass ein besonders kompaktes Getriebe realisiert werden kann, wodurch sich größere Freiheiten bei der Anordnung des Getriebes in dem jeweiligen Fahrzeug ergeben. Aufgrund der Anordnung und Koppelung bzw. Koppelungsmöglichkeiten der einzelnen Komponenten des ersten und des zweiten Planetenradsatzes können ferner mehrere unterschiedliche, durch mindestens einen weiteren Planetenradsatz definierten Übersetzungsverhältnisse in entsprechende Vorwärts- und Rückwärtsgänge umgesetzt werden.

Im Rahmen der Erfindung ist unter "gekoppelt", "verbunden", sowie "miteinander in Verbindung stehen" eine gemeinsame Drehbewegung der beiden durch den jeweiligen Begriff verknüpften Elemente gemeint. Hingegen meint "koppelbar" oder "verbindbar", dass die beiden Elemente über das jeweilige Schaltelement gezielt bei dessen Betätigung in ihren Drehbewegungen aneinander angeglichen werden können und anschließend gemeinsam rotieren.

Dabei fungiert das jeweilige Schaltelement im Falle eines möglichen Festsetzens des jeweiligen Elements am Gehäuse als Bremse, d. h. das jeweilige Element wird bei Betätigung des entsprechenden Schaltelements auf Stillstand abgebremst und durch Verbindung mit dem Gehäuse an einer weiteren Drehbewegung so lange gehindert, bis eine Betätigung des entsprechenden Schaltelements wiederum beendet wird. Dient ein Schaltelement hingegen der Koppelung von zwei rotierbaren Elementen, so wird bei Betätigung des als Kupplung fungierenden Schaltelements zunächst eine Angleichung der Drehzahlen der beiden zu koppelnden Elemente vorgenommen und anschließend deren gemeinsame Drehbewegung erzwungen.

Verbindungen bzw. Koppelungen zwischen den einzelnen Elementen der Planetenradsätze sind im Sinne der Erfindung insbesondere über entsprechend verlaufende Wellen hergestellt, die in Form zylindrischer, ggf. hohlzylindrischer, rotierbar gelagerter Bauteile vorliegen. Allerdings kommen auch anderweitige Verbindungsvarianten der Elemente der Planetenradsätze im Rahmen der Erfindung prinzipiell in Betracht, wie beispielsweise ein Verschweißen, Verschrauben, Verkleben, Klemmen, etc. der Elemente oder auch deren einstückige Ausführung, insbesondere, wenn die beiden in ihrer Drehbewegung zu koppelnden Elemente räumlich dicht beieinander platziert sind. Auch als Kupplung fungierende Schaltelemente sind im Sinne der Erfindung bevorzugt zwischen Wellen vorgesehen, welche wiederum dann mit den miteinander zu koppelnden Elementen der Planetenradsätze verbunden sind, wobei im Einzelfall aber auch zumindest auf einer Seite des jeweiligen Schaltelements eine unmittelbare Anbindung an das jeweilige Element des entsprechenden Planetenradsatzes denkbar ist.

Gemäß der Erfindung ist das Sonnenrad des zweiten Planetenradsatzes mit einem Planetenträger eines dritten Planetenradsatzes, sowie einem Hohlrad eines vierten Planetenradsatzes gekoppelt und kann über ein drittes Schaltelement am Gehäuse festgesetzt werden. Des Weiteren sind ein Hohlrad des dritten Planetenradsatzes und ein Planetenträger des vierten Planetenradsatzes miteinander verbunden und über ein viertes Schaltelement drehfest mit dem Gehäuse koppelbar. Ein Sonnenrad des dritten Planetenradsatzes ist zudem mit der Antriebswelle verbunden, während ein Sonnenrad des vierten Planetenradsatzes mittels eines fünften Schaltelements am Gehäuse festgesetzt werden kann. Schließlich können der dritte und der vierte Planetenradsatz durch Betätigen eines sechsten Schaltelements verblockt werden. Mittels einer derartigen Ausgestaltung eines Mehrstufengetriebes können insgesamt acht Übersetzungsverhältnisse definiert werden, also vier Vorwärts- und vier Rückwärtsgänge.

In Weiterbildung der vorgenannten Ausführungsform koppelt das sechste Schaltelement bei Betätigung die Antriebswelle drehfest mit dem Sonnenrad des vierten Planetenradsatzes oder dem Planetenträger des vierten Planetenradsatzes oder dem Hohlrad des vierten Planetenradsatzes. Jede der drei vorgenannten Varianten hat dabei ein Verblocken des dritten und des vierten Planetenradsatzes zur Folge. Alternativ dazu verblockt das sechste Schaltelement bei Ansteuerung den vierten Planetenradsatz, indem das sechste Schaltelement von den Komponenten Sonnenrad, Planetenträger und Hohlrad des vierten Planetenradsatzes zwei Komponenten drehfest miteinander verbindet, also entweder Sonnenrad und Planetenträger, Sonnenrad und Hohlrad oder Planetenträger und Hohlrad. Auch hierdurch kann ein zuverlässiges Verblocken des vierten und damit auch des dritten Planetenradsatzes erzielt werden.

Es ist eine weitere Ausführungsform der Erfindung, dass insgesamt vier Vorwärtsgänge und vier Rückwärtsgänge darstellbar sind, wobei sich je ein Vorwärtsgang und je ein Rückwärtsgang vom Betrag in ihrem Übersetzungsverhältnis entsprechen. In der Folge können sowohl für Vorwärts- als auch für Rückwärtsfahrt gleiche Fahrleistungen bereitgestellt werden, was das erfindungsgemäße Getriebe für Fahrzeuge mit keiner bevorzugten Fahrtrichtung, wie beispielsweise Schienenfahrzeuge, geeignet macht.

Besonders bevorzugt wird dabei ein erster Vorwärtsgang durch Betätigen des zweiten und des dritten Schaltelements, ein zweiter Vorwärtsgang durch Schließen des zweiten und des vierten Schaltelements, ein dritter Vorwärtsgang durch Betätigen des zweiten und des fünften Schaltelements, sowie ein vierter Vorwärtsgang durch Schließen des zweiten und des sechsten Schaltelements dargestellt. Ein erster Rückwärtsgang wird hingegen durch Betätigen des ersten und des dritten Schaltelements, ein zweiter Rückwärtsgang durch Schließen des ersten und des vierten Schaltelements, ein dritter Rückwärtsgang durch Betätigen des ersten und des fünften Schaltelements, sowie ein vierter Rückwärtsgang durch Schließen des ersten und des sechsten Schaltelements geschaltet. Bei einem aufeinander erfolgenden Schalten der Vorwärtsgänge und auch der Rückwärtsgänge ist dabei stets ein Schaltelement zu Öffnen und im Folgenden ein Schaltelement zu schließen, so dass lediglich ein Umschalten zwischen zwei Schaltelementen zu vollziehen ist und Gangwechsel dementsprechend mit kurzen Schaltzeiten durchgeführt werden können.

In Weiterbildung der Erfindung sind das erste und das zweite Schaltelement bevorzugt jeweils als formschlüssiges Schaltelement ausgeführt, während die verbleibenden Schaltelemente als kraftschlüssige Schaltelemente vorliegen. Besonders bevorzugt handelt es sich bei den formschlüssigen Schaltelementen dabei um Sperrsynchronisationen, diese können aber auch als anderweitige formschlüssige Schaltelemente realisiert sein, wie beispielsweise als Klauenkupplungen. Des Weiteren sind das erste und das zweite Schaltelement insbesondere zu einem Doppelschaltelement zusammengefasst, da das erste Schaltelement stets nur an der Darstellung der Rückwärtsgänge und das zweite Schaltelement stets nur an den Schaltungen der Vorwärtsgänge beteiligt ist, beide Schaltelemente also nie zeitgleich anzusteuern sind. In der Folge kann eine Betätigung der beiden Schaltelemente über einen gemeinsamen Aktuator vorgenommen werden. Verbleibende Schaltelemente liegen bevorzugt als Lamellenkupplungen bzw. -bremsen vor, die jeweils unter Last betätigt werden können. Insbesondere das dritte Schaltelement kann aber ebenfalls als formschlüssiges Schaltelement ausgeführt sein, da dieses an dem ersten Vorwärtsgang und auch dem ersten Rückwärtsgang beteiligt und bei Hochschaltungen dementsprechend nur zu öffnen ist. Im Allgemeinen können aber auch alle oder einzelne Schaltelemente als kraftschlüssige oder als formschlüssige Schaltelemente ausgeführt sein.

Gemäß einer weiteren, bevorzugten Ausgestaltung der Erfindung verlaufen die An- und die Abtriebswelle achsparallel, bevorzugt koaxial, zueinander oder sind unter einem Winkel zueinander angeordnet. Hierdurch kann verschiedensten Einbaulagen des Getriebes, sowie ggf. entsprechenden Ausgestaltungen des Antriebsstranges des jeweiligen Fahrzeuges begegnet werden.

Vorteilhafte Ausgestaltungen der Erfindung, die nachfolgend erläutert werden, sind in den Zeichnungen dargestellt. Es zeigt:
- Fig. 1: eine schematische Ansicht eines Antriebsstrangs eines Schienenfahrzeuges, umfassend ein Mehrstufengetriebe;
- Fig. 2: eine schematische Ansicht eines Mehrstufengetriebes, gestaltet entsprechend einer ersten Ausführungsform der Erfindung;
- Fig. 3: eine schematische Darstellung eines Mehrstufengetriebes, entsprechend einer zweiten Ausgestaltungsmöglichkeit der Erfindung;
- Fig. 4: eine schematische Darstellung eines Mehrstufengetriebes, gemäß einer dritten Ausführungsform der Erfindung;
- Fig. 5: eine schematische Ansicht eines Mehrstufengetriebes, entsprechend einer vierten Ausgestaltungsmöglichkeit der Erfindung;
- Fig. 6: eine schematische Darstellung eines Mehrstufengetriebes, gestaltet entsprechend einer fünften Ausführungsform der Erfindung;
- Fig. 7: eine schematische Ansicht eines Mehrstufengetriebes, gemäß einer sechsten Ausführungsform der Erfindung und
- Fig. 8: ein beispielhaftes Schaltschema eines Mehrstufengetriebes gemäß den Fig. 2 bis 7.

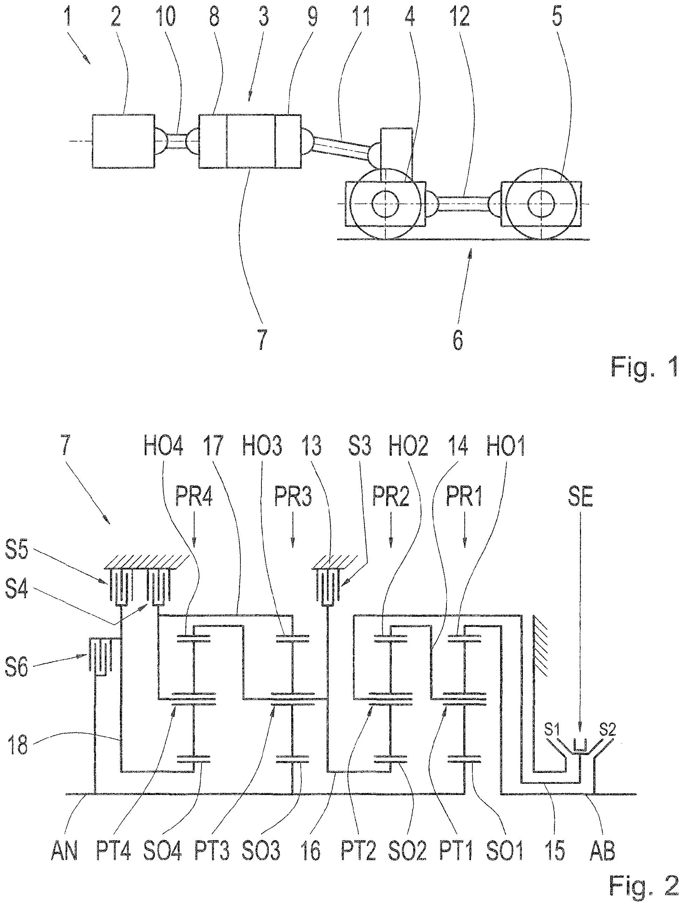

Fig. 1 zeigt eine schematische Darstellung eines Antriebsstranges 1 eines Schienenfahrzeuges, welcher eine Antriebsmaschine 2 in Form einer Brennkraftmaschine, ein Gruppengetriebe 3, sowie zwei Radsatzgetriebe 4 und 5 umfasst. Von diesen Komponenten des Antriebsstranges 1 sind die Antriebsmaschine 2 und das Gruppengetriebe 3 dabei seitens eines - vorliegend nicht weiter dargestellten - Wagenkastens des Schienenfahrzeuges vorgesehen, wohingegen die beiden Radsatzgetriebe 4 und 5 Teil in einem Drehgestell 6 des Schienenfahrzeuges aufgenommen sind.

Das Gruppengetriebe 3 setzt sich vorliegend aus einem Mehrstufengetriebe 7, einer dem Mehrstufengetriebe 7 auf Seiten der Antriebsmaschine 2 vorgeschalteten Splitgruppe 8, sowie einer dem Mehrstufengetriebe 7 seitens der Radsatzgetriebe 4 und 5 nachgeschalteten Bereichsgruppe 9 zusammen. Da bei dem Schienenfahrzeug keine bevorzugte Fahrtrichtung besteht und in der Folge für Vorwärts- und Rückwärtsfahrt jeweils gleiche Fahrleistungen darzustellen sind, ist das Mehrstufengetriebe 7 dazu in der Lage, einander entsprechende Anzahlen an Vorwärts- und Rückwärtsgängen darzustellen, welche dann durch die vorgeschaltete Splitgruppe 8, sowie die nachgeschaltete Bereichsgruppe 9 noch entsprechend aufgeteilt bzw. in unterschiedliche Fahrbereiche übersetzt werden.

Bei einer Splitgruppe handelt es sich üblicherweise um ein zweistufiges Getriebe, welches an dem Getriebeeingang beziehungsweise an der Antriebswelle des Getriebes angeordnet ist. Hierdurch wird jede der vorhandenen Gangstufen der Vorwärtsgänge und Rückwärtsgänge in jeweils zwei Stufen aufgeteilt. Dies führt dazu, dass die Gangsprünge zwischen den einzelnen Vorwärtsgängen und Rückwärtsgängen verringert werden und somit eine feinere Abstufung zwischen den Vorwärtsgängen beziehungsweise Rückwärtsgängen möglich ist. Dadurch ist das Fahrzeug besser in einem optimalen Drehzahlbereich betreibbar. Die Spreizung des Getriebes ändert sich hingegen nur geringfügig. Dies liegt daran, dass lediglich in dem ersten Vorwärtsgang beziehungsweise Rückwärtsgang durch das Splitter-Getriebe eine weitere Übersetzung hinzukommt, die durch das bisherige Übersetzungsverhältnis des Getriebes nicht abgedeckt wurde.

Bei einer Bereichsgruppe handelt es sich üblicherweise um ein zweistufiges Getriebe, häufig ein Planetengetriebe, welches an dem Getriebeausgang beziehungsweise an der Abtriebswelle des Getriebes angeordnet ist. Hierdurch erfährt das gesamte Getriebe, das heißt auch die gesamte Übersetzung, eine weitere Übersetzung. Dies bedeutet, dass sich die Spreizung des Getriebes deutlich verändert. Durch eine Bereichsgruppe wird die Spreizung des Getriebes, als Quotient aus der größten Übersetzung zu der kleinsten Übersetzung, erhöht. Häufig werden Bereichsgruppen verwendet, um eine Übersetzung ins Schnelle, das heißt i < 1, zu erhalten.

Die Verbindung des Gruppengetriebes 3 zu der davorliegenden Antriebsmaschine 2 ist über eine Gelenkwelle 10 hergestellt, wobei innerhalb des Gruppengetriebes 3 ein - vorliegend nicht weiter dargestelltes - Anfahrelement vorgesehen ist, über welches Anfahrvorgänge des Schienenfahrzeuges verwirklicht werden können. Vorliegend ist dieses Anfahrelement dabei bevorzugt als hydrodynamischer Drehmomentwandler ausgeführt. Wie ferner in Fig. 1 zu erkennen ist, ist auch eine Verbindung des Gruppengetriebes 3 zu den nachfolgenden Komponenten in Form der beiden Radsatzgetriebe 4 und 5 durch Gelenkwellen 11 und 12 realisiert, von welchen die Gelenkwelle 11 einen Getriebeausgang der Bereichsgruppe 9 mit einer Eingangsseite des Radsatzgetriebes 4 verbindet, wohingegen die Gelenkwelle 12 wiederum einen Ausgang des Radsatzgetriebes 4 mit einem Eingang des nachfolgenden Radsatzgetriebes 5 koppelt

Aus Fig. 2 geht nun eine schematische Ansicht des Mehrstufengetriebes 7 aus Fig. 1 hervor, welches dabei entsprechend einer ersten Ausführungsform der Erfindung gestaltet ist. Wie zu erkennen ist, verfügt das Mehrstufengetriebe 7 über ein - hier nur teilweise angedeutetes - Gehäuse 13, bei welchem es sich insbesondere um ein gemeinsames Gehäuse des Mehrstufengetriebes 7 mit der Splitgruppe 8 und der Bereichsgruppe 9 handelt und in dem eine Antriebswelle AN, eine Abtriebswelle AB, sowie vier Planetenradsätze PR1, PR2, PR3 und PR4 aufgenommen sind. Es sind jedoch auch Anordnungen denkbar, in denen die Splitgruppe 8 und/oder die Bereichsgruppe 9 jeweils ein separates Gehäuse aufweisen. Diese können dann entweder an dem Gehäuse 13 des Mehrstufengetriebes 7 aufgehängt oder zusammen mit dem Gehäuse 13 des Mehrstufengetriebes 7 an einem gemeinsamen Rahmen befestigt sein.

Die Planetenradsätze PR1 bis PR4 sind dabei jeweils als Minusplanetenradsätze ausgebildet und umfassen jeweils je einen mehrere Planetenräder führenden Planetenträger PT1 bzw. PT2 bzw. PT3 bzw. PT4, dessen drehbar gelagerte Planetenräder jeweils mit je einem radial innenliegenden Sonnenrad SO1 bzw. SO2 bzw. SO3 bzw. SO4, sowie je einem zugeordneten, radial umliegenden Hohlrad HO1 bzw. HO2 bzw. HO3 bzw. HO4 kämmen. Im Rahmen der Erfindung ist aber ebenso gut eine Ausbildung zumindest eines der Minusplanetenradsätze als Plusplanetenradsatz denkbar, wenn dabei gleichzeitig eine Steg- und eine Hohlradanbindung miteinander getauscht und der Betrag der Standübersetzung im Vergleich zu der Ausführung als Minusplanetenradsatz um eins erhöht wird. Vorliegend sind die Planetenradsätze PT1 bis PT4 axial von links nach rechts in der Reihenfolge PT4, PT3, PT2 und PT1 angeordnet, wobei im Sinne der Erfindung aber auch anderweitige Anordnungen in axialer Richtung denkbar sind.

Wie ferner aus Fig. 2 hervorgeht, umfasst das Mehrstufengetriebe 7 insgesamt sechs Schaltelemente S1 bis S6, von welchem die Schaltelemente S1, S3, S4 und S5 als Bremsen und die Schaltelemente S2 und S6 als Kupplungen ausgebildet sind. Zudem liegen die Schaltelemente S1 und S2 jeweils als Sperrsynchronisationen vor, die dabei zu einem Doppelschaltelement SE zusammengefasst sind, während die Schaltelemente S3 bis S6 jeweils als kraftschlüssige Schaltelemente in Form von Lamellenbremsen bzw. -kupplungen ausgestaltet sind. Eine räumliche Anordnung der Schaltelemente S1 bis S6 kann dabei beliebig sein und wird nur durch deren Abmessungen, sowie die äußere Formgebung begrenzt. Ferner ist erfindungsgemäß neben der jeweiligen Ausführung als formschlüssiges Schaltelement bzw. kraftschlüssiges Schaltelement auch eine Ausführung als kraftschlüssiges Schaltelement oder formschlüssiges Schaltelement denkbar. Insbesondere kann dabei das Schaltelement S3 auch abweichend von der in der Fig. 2 gezeigten Ausführung als formschlüssiges Schaltelement gestaltet sein.

Durch gezielte Betätigung der Schaltelemente S1 bis S6 ist ein selektives Schalten verschiedener Übersetzungsverhältnisse zwischen der Antriebswelle AN und der Abtriebswelle AB möglich, wobei die Planetenradsätze PR1 bis PR4 dabei unterschiedlich untereinander verknüpft werden. Für die Verknüpfung sind in dem Gehäuse 13, neben der Antriebswelle AN und der Abtriebswelle AB, fünf weitere Wellen 14 bis 18 aufgenommen.

Vorliegend ist das Hohlrad HO1 des ersten Planetenradsatzes PR1 mit der Abtriebswelle AB gekoppelt und das Sonnenrad SO1 des ersten Planetenradsatzes PR1 drehfest auf der Antriebswelle AN platziert, während der Planetenträger PT1 des ersten Planetenradsatzes über eine erste Welle 14 mit dem Hohlrad HO2 des zweiten Planetenradsatzes PR2 gekoppelt ist. Ferner steht der Planetenradträger PT2 des zweiten Planetenradsatzes PR2 mit einer zweiten Welle 15 in Verbindung, welche zum einen über das erste Schaltelement S1 am Gehäuse 13 festgesetzt und zum anderen über das zweite Schaltelement S2 drehfest mit der Abtriebswelle AB gekoppelt werden kann. Dabei werden im letztgenannten Fall Vorwärtsgänge des Mehrstufengetriebes 7 definiert, wohingegen das Festsetzen der zweiten Welle 15 am Gehäuse 13 mittels des ersten Schaltelements S1 in der Darstellung der unterschiedlichen Rückwärtsgänge des Mehrstufengetriebes 7 resultiert.

Um nun unterschiedliche Vorwärts- und Rückwärtsgänge, d. h. unterschiedliche Übersetzungsverhältnisse für Vorwärts- und Rückwärtsfahrt, bilden zu können, ist das Sonnenrad SO2 des zweiten Planetenradsatzes PR2 über eine dritte Welle 16 mit dem Planetenträger PT3 des dritten Planetenradsatzes PR3 und dem Hohlrad HO4 des vierten Planetenradsatzes PR4 gekoppelt. Die dritte Welle 16 steht dabei zudem mit dem dritten Schaltelement S3 in Verbindung und kann über dieses bei entsprechender Betätigung gezielt am Gehäuse 13 festgesetzt werden.

Ferner ist das Sonnenrad SO3 des dritten Planetenradsatzes PR3, genau wie das Sonnenrad SO1 des ersten Planetenradsatzes PR1, drehfest auf der Antriebswelle AN angeordnet, wohingegen das Hohlrad HO3 des dritten Planetenradsatzes PR3 mit dem Planetenträger PT4 des vierten Planetenradsatzes PR4 über eine vierte Welle 17 verbunden ist, die mittels des vierten Schaltelements S4 ebenfalls am Gehäuse 13 festsetzbar ist. Schließlich ist noch das Sonnenrad SO4 des vierten Planetenradsatzes PR4 auf einer fünften Welle 18 vorgesehen, die zum einen über das fünfte Schaltelement S5 mit dem Gehäuse 13 und zum anderen über das sechste Schaltelement S6 mit der Antriebswelle AN jeweils drehfest verbindbar ist. Bei Betätigung des fünften Schaltelements erfolgt dementsprechend ein Festsetzen der fünften Welle 18 am Gehäuse 13, während im Falle einer Ansteuerung des sechsten Schaltelements S6 eine gemeinsame Drehbewegung der Antriebswelle AN mit der fünften Welle 18 eingeleitet wird. Der letztgenannte Fall bewirkt dabei ein Verblocken des dritten und des vierten Planetenradsatzes PR3 und PR4.

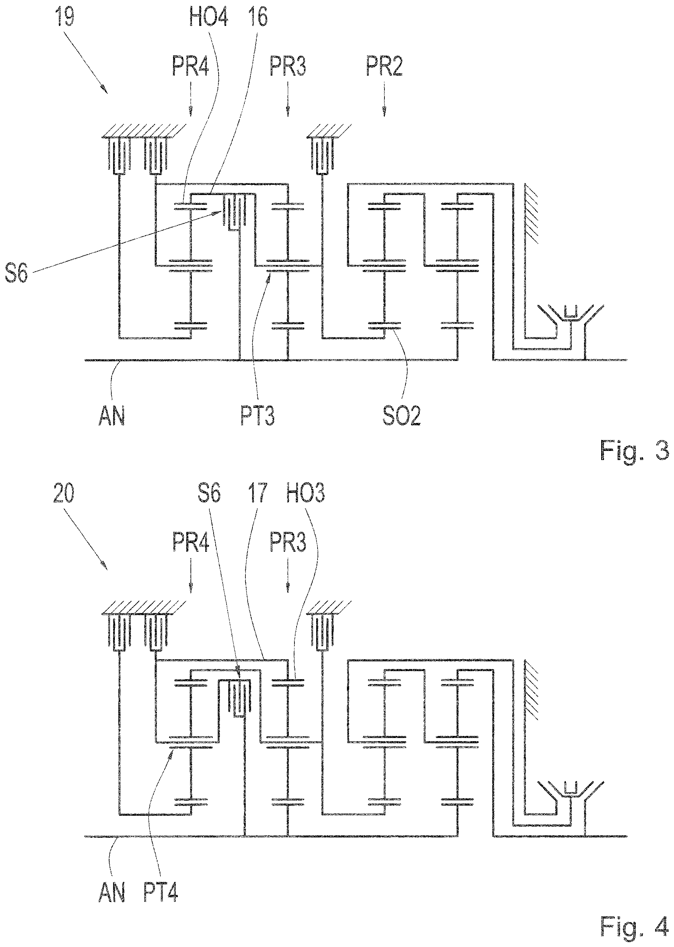

Aus Fig. 3 geht ferner eine schematische Darstellung eines Mehrstufengetriebes 19 hervor, welches entsprechend einer zweiten Ausgestaltungsmöglichkeit der Erfindung ausgeführt ist und alternativ zu dem Mehrstufengetriebe 7 aus Fig. 2 in dem Antriebsstrang 1 des Schienenfahrzeuges aus Fig. 1 zur Anwendung kommen kann. Dabei entspricht das Mehrstufengetriebe 19 weitestgehend der vorhergehenden Variante aus Fig. 2, wobei als einziger Unterschied das sechste Schaltelement S6 zwischen der Antriebswelle AN und der dritten Welle 16 vorgesehen ist, welche das Hohlrad HO4 des vierten Planetenradsatzes PR4 mit dem Planetenträger PT3 des dritten Planetenradsatzes PR3, sowie dem Sonnenrad SO2 des zweiten Planetenradsatzes PR2 verbindet. Bei Ansteuerung des sechsten Schaltelements S6 wird demzufolge eine Drehbewegung der dritten Welle 16 mit einer Drehbewegung der Antriebswelle AN gekoppelt, was ebenfalls zu einem Verblocken des dritten und des vierten Planetenradsatzes PR3 und PR4 führt. Im Übrigen entspricht die Ausgestaltung der Ausführungsform nach Fig. 2, so dass auf das hierzu Beschriebene Bezug genommen wird.

Des Weiteren geht aus Fig. 4 eine schematische Ansicht eines Mehrstufengetriebes 20 hervor, das gemäß einer dritten Ausführungsform der Erfindung gestaltet ist und ebenfalls alternativ zu dem Mehrstufengetriebe 7 bei dem Antriebsstrang 1 in Fig. 1 zur Anwendung kommen kann. Allerdings entspricht auch das Mehrstufengetriebe 20 weitestgehend der Variante nach Fig. 2, wobei als einziger Unterschied das sechste Schaltelement S6 zwischen der Antriebswelle AN und dem Planetenträger PT4 des vierten Planetenradsatzes PR4 platziert ist, der im Weiteren dann, wie schon bei dem Mehrstufengetriebe in Fig. 2, über die vierte Welle 17 mit dem Hohlrad HO3 des dritten Planetenradsatzes PR3 verbunden ist. Ein Verblocken der Planetenradsätze PR3 und PR4 wird bei Betätigung des sechsten Schaltelements S6 dadurch erreicht, dass die Antriebswelle AN somit in ihrer Drehbewegung mit der vierten Welle 17 gekoppelt wird. Im Übrigen entspricht die Ausgestaltung nach Fig. 4 der Variante nach Fig. 2, so dass wiederum auf das hierzu Beschriebene Bezug genommen wird.

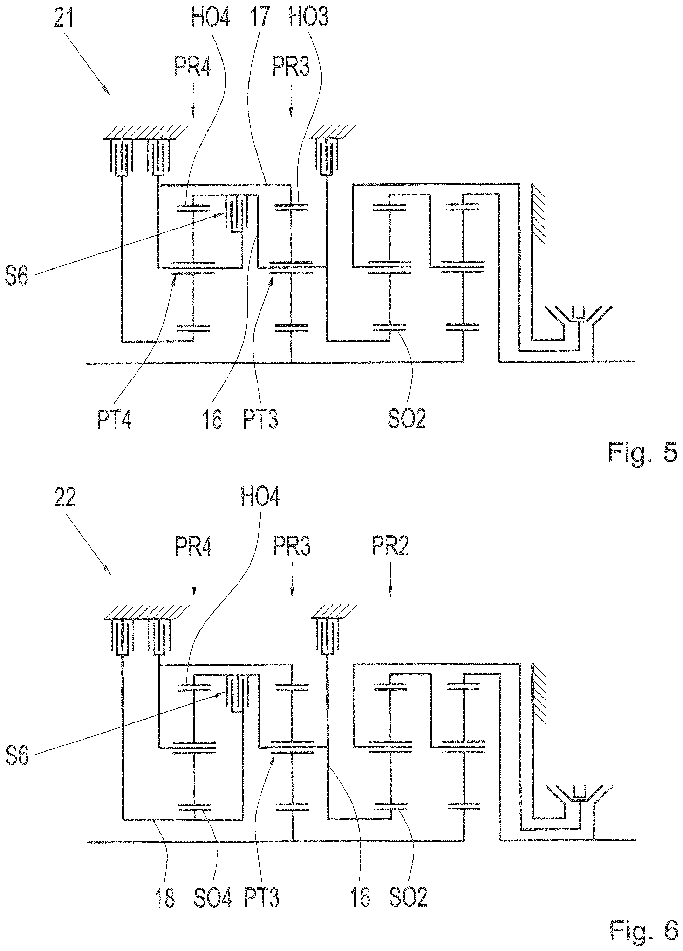

Fig. 5 zeigt die schematische Darstellung eines Mehrstufengetriebes 21 gemäß einer vierten Ausgestaltungsmöglichkeit der Erfindung, wobei das Mehrstufengetriebe 21 ebenfalls wieder als Alternative zu dem Mehrstufengetriebe 7 bei dem in Fig. 1 dargestellten Antriebsstrang 1 Anwendung finden kann. Dabei unterscheidet sich das Mehrstufengetriebe 21 von dem Mehrstufengetriebe 7 aus Fig. 2 dadurch, dass das sechste Schaltelement S6 bei Betätigung den Planetenträger PT4 des vierten Planetenradsatzes PR4 drehfest mit der dritten Welle 16 verbindet. In der Folge sind die das Hohlrad HO4 mit dem Planetenträger PT3 und dem Sonnenrad SO2 verbindende, dritte Welle 16 und die den Planetenträger PT4 mit dem Hohlrad HO3 koppelnde, vierte Welle 17 in ihren Drehbewegungen gekoppelt, was wiederum in einem Verblocken der Planetenradsätze PR4 und PR3 resultiert. Hinsichtlich der weiteren Gestaltung des Mehrstufengetriebes 21 wird aufgrund der Übereinstimmung mit dem Mehrstufengetriebe 7 auf das Beschriebene zu Fig. 2 Bezug genommen.

Ferner zeigt Fig. 6 eine schematische Darstellung eines Mehrstufengetriebes 22 entsprechend einer fünften Ausgestaltungsmöglichkeit der Erfindung. Auch das Mehrstufengetriebe 22 kann wiederum als Alternative zu dem Mehrstufengetriebe 7 im Antriebsstrang 1 nach Fig. 1 zur Anwendung kommen und unterscheidet sich von dem Mehrstufengetriebe 7 aus Fig. 2 lediglich dadurch, dass das sechste Schaltelement S6 zwischen der fünften Welle 18 und der dritten Welle 16 angeordnet ist. In der Folge werden die beiden Wellen 16 und 18 bei einer Betätigung des sechsten Schaltelements S6 miteinander gekoppelt, so dass auch die mit diesen jeweils verbundenen Komponenten in Form des Sonnenrades SO4 des vierten Planetenradsatzes PR4, des Hohlrades HO4 des vierten Planetenradsatzes PR4, des Planetenträgers PT3 des dritten Planetenradsatzes PR3, sowie des Sonnenrades SO2 des zweiten Planetenradsatzes PR2 in der Folge gemeinsam rotieren. Dabei sind der dritte Planetenradsatz PR3 und der vierte Planetenradsatz PR4 wiederum verblockt. Im Übrigen entspricht die Ausführungsform nach Fig. 6 sonst wieder der Variante nach Fig. 2, so dass auf das zu Fig. 2 Beschriebene hiermit Bezug genommen wird.

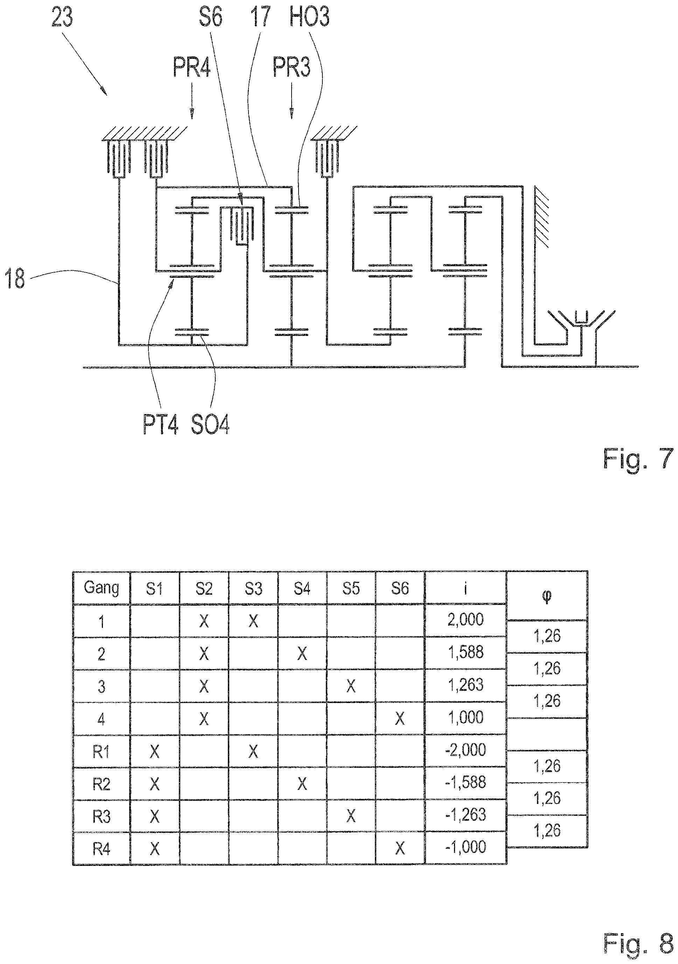

Schließlich geht aus Fig. 7 noch eine schematische Darstellung eines Mehrstufengetriebes 23 gemäß einer sechsten Ausführungsform der Erfindung hervor. Auch diese Variante stellt wieder eine denkbare Ausgestaltung für eine Anwendung in einem Antriebsstrang 1 gemäß Fig. 1 dar und entspricht im Wesentlichen dem Mehrstufengetriebe 7 aus Fig. 2. Im Unterschied zu der Variante nach Fig. 2 wird jedoch ein Verblocken der Planetenradsätze PR3 und PR4 dadurch hervorgerufen, dass das sechste Schaltelement S6 bei Betätigung die fünfte Welle 18 drehfest mit dem Planetenträger PT4 des vierten Planetenradsatzes PR4 und damit mit der vierten Welle 17 verbindet. In der Folge rotieren die an den Wellen 17 und 18 angebundenen Elemente in Form des Sonnenrades SO4, des Planetenträgers PT4 und des Hohlrades HO3 ebenfalls gemeinsam. Hinsichtlich einer weiteren Ausgestaltung des Mehrstufengetriebes 23 wird hiermit wiederum Bezug auf das zu Fig. 2 Beschriebene genommen.

Fig. 8 zeigt ein beispielhaftes Schaltschema für die Mehrstufengetriebe 7, 19, 20, 21, 22 und 23 der Fig. 2 bis 7. Wie zu erkennen ist, können hierbei vier Vorwärtsgänge, sowie vier Rückwärtsgänge dargestellt werden, wobei zur Darstellung jedes einzelnen Ganges jeweils zwei der insgesamt sechs Schaltelemente S1 bis S6 geschlossen sind und für einen Wechsel zwischen zwei benachbart liegenden Gängen der Zustand von je zwei Schaltelementen zu verändern ist. Dem beispielhaften Schaltschema in Fig. 8 können zudem die jeweiligen Übersetzungen i in den einzelnen Vorwärts- bzw. Rückwärtsgängen, sowie die sich ergebenden Gangsprünge ϕ zum jeweils benachbart liegenden Gang beispielhaft entnommen werden. Dabei ist zu erkennen, dass die Gangsprünge ϕ jeweils konstant gehalten sind und sich zudem je ein Vorwärtsgang und je ein Rückwärtsgang vom Betrag her in ihrem Übersetzungsverhältnis i entsprechen. Insofern unterscheiden sich diese beiden jeweiligen Gänge nur hinsichtlich der Fahrtrichtung, nicht aber hinsichtlich der darstellbaren Fahrleistung

Prinzipiell ist die Höhe der einzelnen Übersetzungsverhältnisse i über die Höhe von Standübersetzungen der Planetenradsätze PR1 bis PR4 frei wählbar, wobei jedoch die in Fig. 8 beispielhaft gezeigten Werte für das Übersetzungsverhältnis i und die Gangsprünge ϕ bevorzugt sind und bei bevorzugten Standübersetzungen des ersten Planetenradsatzes PR1 von -2,000, des zweiten Planetenradsatzes PR2 in Höhe von -3,000, des dritten Planetenradsatzes PR3 in Höhe von -2,850, sowie des vierten Planetenradsatzes PR4 in Höhe von -3,000 erzielt werden.

Wie nun aus Fig. 8 zu erkennen ist, ergibt sich ein erster Vorwärtsgang durch Schließen des zweiten Schaltelements S2 und des dritten Schaltelements S3, wobei zum Schalten in einen zweiten Vorwärtsgang das dritte Schaltelement S3 zu öffnen und das vierte Schaltelement S4 im Folgenden zu schließen ist. Ausgehend vom zweiten Vorwärtsgang kann dann in einen dritten Vorwärtsgang übergegangen werden, indem das vierte Schaltelement S4 wiederum geöffnet und das fünfte Schaltelement S5 betätigt wird. Schließlich ist ein vierter Vorwärtsgang dadurch darstellbar, indem ausgehend vom dritten Vorwärtsgang das fünfte Schaltelement S5 geöffnet und das sechste Schaltelement geschlossen wird. An der Darstellung der einzelnen Vorwärtsgänge ist also jeweils stets das zweite Schaltelement S2 beteiligt.

Einziger Unterschied gegenüber den Vorwärtsgängen ist bei der Darstellung der Rückwärtsgänge, dass stets das erste Schaltelement S1 anstelle des zweiten Schaltelements S2 betätigt ist. Ansonsten wird bei einer Schaltung der einzelnen Rückwärtsgänge entlang einer Schaltfolge nacheinander das dritte Schaltelement S3, das vierte Schaltelement S4, das fünfte Schaltelement S5, sowie das sechste Schaltelement S6 geschlossen und beim Übergang in den folgenden Rückwärtsgang wieder geöffnet.

Die in den Fig. 2 bis 7 jeweils dargestellten Mehrstufengetrieben 7 und 19 bis 23 sind jeweils koaxial aufgebaut, indem sich die Antriebswelle AN und die Abtriebswelle AB koaxial gegenüberliegen. Alternativ dazu ist aber auch prinzipiell eine Front-Quer-Bauweise denkbar, bei welcher die Antriebswelle AN und die Abtriebswelle AB unter einem Winkelversatz zueinander liegen. Ferner ist auch ein reiner Achsversatz zwischen beiden Wellen denkbar.

Erfindungsgemäß ist es ferner möglich, an jeder geeigneten Stelle des jeweiligen Mehrstufengetriebes 7 und 19 bis 23 zusätzliche Freiläufe vorzusehen, beispielsweise zwischen einer Welle und dem Gehäuse, oder um zwei Wellen ggf. zu verbinden. Des Weiteren kann der Abtrieb prinzipiell überall an der jeweiligen Abtriebswelle AB und der Antrieb prinzipiell auch überall an der jeweiligen Antriebswelle AN erfolgen.

Schließlich ist es im Rahmen der Erfindung denkbar, auf jeder der Wellen, bevorzugt auf der jeweiligen Antriebswelle AN oder der jeweiligen Abtriebswelle AB, eine elektrische Maschine als Generator und/oder als zusätzliche Antriebsmaschine anzuordnen.

Mittels der erfindungsgemäßen Ausgestaltungen eines Mehrstufengetriebes kann ein kompaktes Getriebe für einen Antriebsstrang eines Fahrzeuges mit gleichwertigen Fahrtrichtungen geschaffen werden.

### Bezugszeichen

- 1: Antriebsstrang
- 2: Antriebsmaschine
- 3: Gruppengetriebe
- 4: Radsatzgetriebe
- 5: Radsatzgetriebe
- 6: Drehgestell
- 7: Mehrstufengetriebe
- 8: Splitgruppe
- 9: Bereichsgruppe
- 10: Gelenkwelle
- 11: Gelenkwelle
- 12: Gelenkwelle
- 13: Gehäuse
- 14: erste Welle
- 15: zweite Welle
- 16: dritte Welle
- 17: vierte Welle
- 18: fünfte Welle
- 19: Mehrstufengetriebe
- 20: Mehrstufengetriebe
- 21: Mehrstufengetriebe
- 22: Mehrstufengetriebe
- 23: Mehrstufengetriebe
- AN: Antriebswelle
- AB: Abtriebswelle
- PR1: erster Planetenradsatz
- PR2: zweiter Planetenradsatz
- PR3: dritter Planetenradsatz
- PR4: vierter Planetenradsatz
- PT1: Planetenträger erster Planetenradsatz
- PT2: Planetenträger zweiter Planetenradsatz
- PT3: Planetenträger dritter Planetenradsatz
- PT4: Planetenträger vierter Planetenradsatz
- SO1: Sonnenrad erster Planetenradsatz
- SO2: Sonnenrad zweiter Planetenradsatz
- SO3: Sonnenrad dritter Planetenradsatz
- SO4: Sonnenrad vierter Planetenradsatz
- HO1: Hohlrad erster Planetenradsatz
- HO2: Hohlrad zweiter Planetenradsatz
- HO 3: Hohlrad dritter Planetenradsatz
- HO 4: Hohlrad vierter Planetenradsatz
- S1: erstes Schaltelement
- S2: zweites Schaltelement
- S3: drittes Schaltelement
- S4: viertes Schaltelement
- S5: fünftes Schaltelement
- S6: sechstes Schaltelement
- SE: Doppelschaltelement

## Patentansprüche

1. Mehrstufengetriebe (7, 19, 20, 21, 22, 23), insbesondere Automatgetriebe für ein Schienenfahrzeug, umfassend, entweder jeweils nur als Minusplanetenradsätze oder jeweils nur als Plusplanetenradsätze ausgeführte Planetenradsätze (PR1, PR2, PR3, PR4), weiche in einem Gehäuse (13) aufgenommen und über welche unterschiedliche Übersetzungsverhältnisse zwischen einer Antriebswelle (AN) und einer Abtriebswelle (AB) durch selektive Betätigung von Schaltelementen (S1 bis S6) darstellbar sind, wobei die Übersetzungsverhältnisse einander entsprechende Anzahlen an darstellbaren Vorwärtsgängen und darstellbaren Rückwärtsgängen bilden, **dadurch gekennzeichnet, dass** ein Sonnenrad (SO1) eines ersten Planetenradsatzes (PR1) mit der Antriebswelle (AN) und ein Hohlrad (HO1) des ersten Planetenradsatzes (PR1) mit der Abtriebswelle (AB) verbunden ist, wohingegen ein Planetenträger (PT1) des ersten Planetenradsatzes (PR1) mit einem Hohlrad (HO2) eines zweiten Planetenradsatzes (PR2) gekoppelt ist, und dass ein Sonnenrad (SO2) des zweiten Planetenradsatzes (PR2) mit mindestens einem weiteren Planetenradsatz (PR3, PR4) in Verbindung steht, während ein Planetenträger (PT2) des zweiten Planetenradsatzes (PR2) einerseits zur Darstellung der Rückwärtsgänge über ein erstes Schaltelement (S1) am Gehäuse (13) festsetzbar und andererseits zur Darstellung der Vorwärtsgänge mittels eines zweiten Schaltelements (S2) drehfest mit der Abtriebswelle (AB) verbindbar ist, und das Sonnenrad (SO2) des zweiten Planetenradsatzes (PR2) mit einem Planetenträger (PT3) eines dritten Planetenradsatzes (PR3), sowie einem Hohlrad (HO4) eines vierten Planetenradsatzes (PR4) gekoppelt und über ein drittes Schaltelement (S3) am Gehäuse (13) festsetzbar ist, wobei ein Hohlrad (HO3) des dritten Planetenradsatzes (PR3) und ein Planetenträger (PT4) des vierten Planetenradsatzes (PR4) miteinander verbunden und über ein viertes Schaltelement (S4) drehfest mit dem Gehäuse (13) koppelbar sind, wobei ein Sonnenrad (SO3) des dritten Planetenradsatzes (PR3) mit der Antriebswelle (AN) verbunden und ein Sonnenrad (SO4) des vierten Planetenradsatzes (PR4) mittels eines fünften Schaltelements (S5) am Gehäuse (13) festsetzbar ist, und wobei der dritte (PR3) und der vierte Planetenradsatz (PR4) durch Betätigen eines sechsten Schaltelements (S6) verblockbar sind.

2. Mehrstufengetriebe (7, 19, 20) nach Anspruch 1, **dadurch gekennzeichnet, dass** das sechste Schaltelement (S6) bei Betätigung die Antriebswelle (AN) drehfest mit dem Sonnenrad (SO4) des vierten Planetenradsatzes (PR4) oder dem Planetenträger (PT4) des vierten Planetenradsatzes (PR4) oder dem Hohlrad (HO4) des vierten Planetenradsatzes (PR4) koppelt.

3. Mehrstufengetriebe (21, 22, 23) nach Anspruch 1, **dadurch gekennzeichnet, dass** das sechste Schaltelement (S6) bei Ansteuerung den vierten Planetenradsatz (PR4) verblockt, indem es von den Komponenten Sonnenrad (S04), Planetenträger (PT4) und Hohlrad (HO4) des vierten Planetenradsatzes (PR4) zwei Komponenten drehfest miteinander verbindet.

4. Mehrstufengetriebe (7, 19, 20, 21, 22, 23) nach Anspruch 1, **dadurch gekennzeichnet, dass** insgesamt vier Vorwärtsgänge und vier Rückwärtsgänge darstellbar sind, wobei sich je ein Vorwärtsgang und je ein Rückwärtsgang vom Betrag in ihrem Übersetzungsverhältnis entsprechen.

5. Mehrstufengetriebe (7, 19, 20, 21, 22, 23) nach Anspruch 1 und 4, **dadurch gekennzeichnet, dass** ein erster Vorwärtsgang durch Betätigen des zweiten (S2) und des dritten Schaltelements (S3), ein zweiter Vorwärtsgang durch Schließen des zweiten (S2) und des vierten Schaltelements (S4), ein dritter Vorwärtsgang durch Betätigen des zweiten (S2) und des fünften Schaltelements (S5), sowie ein vierter Vorwärtsgang durch Schließen des zweiten (S2) und des sechsten Schaltelements (S6) darstellbar ist, und dass ein erster Rückwärtsgang durch Betätigen des ersten (S1) und des dritten Schaltelements (S3), ein zweiter Rückwärtsgang durch Schließen des ersten (S1) und des vierten Schaltelements (S4), ein dritter Rückwärtsgang durch Betätigen des ersten (S1) und des fünften Schaltelements (S5), sowie ein vierter Rückwärtsgang durch Schließen des ersten (S1) und des sechsten Schaltelements (S6) schaltbar ist.

6. Mehrstufengetriebe (7, 19, 20, 21, 22, 23) nach einem der vorhergehenden Ansprüche, **dadurch gekennzeichnet, dass** das erste (S1) und das zweite Schaltelement (S2) jeweils als formschlüssiges Schaltelement ausgeführt sind, während die verbleibenden Schaltelemente (S3 bis S6) als kraftschlüssige Schaltelemente vorliegen.

7. Mehrstufengetriebe (7, 19, 20, 21, 22, 23) nach Anspruch 1, **dadurch gekennzeichnet, dass** die Antriebswelle (AN) und die Abtriebswelle (AB) achsparallel, bevorzugt koaxial, oder winkelig zueinander verlaufen.

8. Antriebsstrang (1) eines Fahrzeuges, insbesondere eines Schienenfahrzeuges, umfassend ein Mehrstufengetriebe (7) nach einem oder mehreren der Ansprüche 1 bis 7.

9. Antriebsstrang (1) nach Anspruch 8, **dadurch gekennzeichnet, dass** dem Mehrstufengetriebe (7) eine Splitgruppe (8) und/oder eine Bereichsgruppe (9) jeweils vor- und/oder nachgeschaltet ist.

## Claims

1. Multi-step transmission (7, 19, 20, 21, 22, 23), in particular automatic transmission for a rail vehicle, comprising planetary gear sets (PR1, PR2, PR3, PR4) which are configured either in each case only as negative planetary gear sets or in each case only as positive planetary gear sets, which are received in a housing (13), and via which different transmission ratios between a drive shaft (AN) and an output shaft (AB) can be produced by way of selective actuation of shifting elements (S1 to S6), the transmission ratios forming numbers which correspond to one another of forward gears which can be produced and reverse gears which can be produced, **characterized in that** a sun gear (SO1) of a first planetary gear set (PR1) is connected to the drive shaft (AN) and an internal gear (HO1) of the first planetary gear set (PR1) is connected to the output shaft (AB), whereas a planetary carrier (PT1) of the first planetary gear set (PR1) is coupled to an internal gear (HO2) of a second planetary gear set (PR2), and **in that** a sun gear (SO2) of the second planetary gear set (PR2) is connected to at least one further planetary gear set (PR3, PR4), whereas a planetary carrier (PT2) of the second planetary gear set (PR2) can firstly be fixed via a first shifting element (S1) on the housing (13) in order to produce the reverse gears, and can secondly be connected via a second shifting element (S2) to the output shaft (AB) fixedly so as to rotate with it in order to produce the forward gears, and the sun gear (SO2) of the second planetary gear set (PR2) is coupled to a planetary carrier (PT3) of a third planetary gear set (PR3) and to an internal gear (HO4) of a fourth planetary gear set (PR4) and can be fixed via a third shifting element (S3) on the housing (13), an internal gear (HO3) of the third planetary gear set (PR3) and a planetary carrier (PT4) of the fourth planetary gear set (PR4) being connected to one another and being capable of being coupled fixedly to the housing (13) so as to rotate with it via a fourth shifting element (S4), a sun gear (SO3) of the third planetary gear set (PR3) being connected to the drive shaft (AN), and it being possible for a sun gear (SO4) of the fourth planetary gear set (PR4) to be fixed by means of a fifth shifting element (S5) on the housing (13), and it being possible for the third (PR3) and the fourth planetary gear set (PR4) to be interlocked by way of actuation of a sixth shifting element (S6).

2. Multi-step transmission (7, 19, 20) according to Claim 1, **characterized in that**, in the case of actuation, the sixth shifting element (S6) couples the drive shaft (AN) fixedly to the sun gear (SO4) of the fourth planetary gear set (PR4) or the planetary carrier (PT4) of the fourth planetary gear set (PR4) or the internal gear (HO4) of the fourth planetary gear set (PR4) so as to rotate with it.

3. Multi-step transmission (21, 22, 23) according to Claim 1, **characterized in that**, in the case of actuation, the sixth shifting element (S6) interlocks the fourth planetary gear set (PR4), by it connecting two components of the components of sun gear (SO4), planetary carrier (PT4) and internal gear (HO4) of the fourth planetary gear set (PR4) fixedly to one another so as to rotate together.

4. Multi-step transmission (7, 19, 20, 21, 22, 23) according to Claim 1, **characterized in that** a total of four forward gears and four reverse gears can be produced, in each case one forward gear and in each case one reverse gear corresponding to one another in terms of the magnitude of their transmission ratio.

5. Multi-step transmission (7, 19, 20, 21, 22, 23) according to Claims 1 and 4, **characterized in that** a first forward gear can be produced by way of actuation of the second (S2) and the third shifting element (S3), a second forward gear can be produced by way of closure of the second (S2) and the fourth shifting element (S4), a third forward gear can be produced by way of actuation of the second (S2) and the fifth shifting element (S5), and a fourth forward gear can be produced by way of closure of the second (S2) and the sixth shifting element (S6), and **in that** a first reverse gear can be selected by way of actuation of the first (S1) and the third shifting element (S3), a second reverse gear can be selected by way of closure of the first (S1) and the fourth shifting element (S4), a third reverse gear can be selected by way of actuation of the first (S1) and the fifth shifting element (S5), and a fourth reverse gear can be selected by way of closure of the first (S1) and the sixth shifting element (S6).

6. Multi-step transmission (7, 19, 20, 21, 22, 23) according to one of the preceding claims, **characterized in that** the first (S1) and the second shifting element (S2) are configured in each case as a positively locking shifting element, whereas the remaining shifting elements (S3 to S6) are present as non-positive shifting elements.

7. Multi-step transmission (7, 19, 20, 21, 22, 23) according to Claim 1, **characterized in that** the drive shaft (AN) and the output shaft (AB) run axially in parallel, preferably coaxially, or at an angle with respect to one another.

8. Drive train (1) of a vehicle, in particular of a rail vehicle, comprising a multi-step transmission (7) according to one or more of Claims 1 to 7.

9. Drive train (1) according to Claim 8, **characterized in that** a split group (8) and/or a range group (9) are/is arranged in each case upstream and/or downstream of the multi-step transmission (7).

## Revendications

1. Boîte de vitesses multiétagée (7, 19, 20, 21, 22, 23), en particulier boîte de vitesses automatiques pour un véhicule ferroviaire, comprenant des trains planétaires (PR1, PR2, PR3, PR4) réalisés à chaque fois seulement sous forme de trains planétaires négatifs ou à chaque fois seulement sous forme de trains planétaires positifs, qui sont reçus dans un boîtier (13) et par le biais desquels différents rapports de démultiplication entre un arbre d'entraînement (AN) et un arbre de prise de force (AB) peuvent être réalisés par un actionnement sélectif d'éléments de commutation (S1 à S6), les rapports de démultiplication formant des nombres mutuellement correspondants de rapports de marche avant réalisables et de rapports de marche arrière réalisables, **caractérisée en ce qu'**une roue solaire (SO1) d'un premier train planétaire (PR1) est connectée à l'arbre d'entraînement (AN) et une couronne dentée (HO1) du premier train planétaire (PR1) est connectée à l'arbre de prise de force (AB), tandis qu'un porte-satellites (PT1) du premier train planétaire (PR1) est accouplé à une couronne dentée (HO2) d'un deuxième train planétaire (PR2), et **en ce qu'**une roue solaire (SO2) du deuxième train planétaire (PR2) est en liaison avec au moins un train planétaire supplémentaire (PR3, PR4), tandis qu'un porte-satellites (PT2) du deuxième train planétaire (PR2) peut d'une part être fixé au boîtier (13) pour réaliser les rapports de marche arrière par le biais d'un premier élément de commutation (S1) et d'autre part peut-être relié de manière solidaire en rotation à l'arbre de prise de force (AB) pour réaliser les rapports de marche avant au moyen d'un deuxième élément de commutation (S2), et la roue solaire (SO2) du deuxième train planétaire (PR2) est accouplée à un porte-satellites (PT3) d'un troisième train planétaire (PR3), ainsi qu'à une couronne dentée (HO4) d'un quatrième train planétaire (PR4) et peut être fixée au boîtier (13) par le biais d'un troisième élément de commutation (S3), une couronne dentée (HO3) du troisième train planétaire (PR3) et un porte-satellites (PT4) du quatrième train planétaire (PR4) étant reliés l'un à l'autre et pouvant être accouplés de manière solidaire en rotation au boîtier (13) par le biais d'un quatrième élément de commutation (S4), une roue solaire (SO3) du troisième train planétaire (PR3) étant reliée à l'arbre d'entraînement (AN) et une roue solaire (SO4) du quatrième train planétaire (PR4) pouvant être fixée au boîtier (13) au moyen d'un cinquième élément de commutation (S5), et le troisième (PR3) et le quatrième (PR4) train planétaire pouvant être bloqués par l'actionnement d'un sixième élément de commutation (S6).

2. Boîte de vitesses multiétagée (7, 19, 20) selon la revendication 1, **caractérisée en ce que** le sixième élément de commutation (S6), lors de l'actionnement, accouple de manière solidaire en rotation l'arbre d'entraînement (AN) à la roue solaire (SO4) du quatrième train planétaire (PR4) ou au porte-satellites (PT4) du quatrième train planétaire (PR4) ou à la couronne dentée (HO4) du quatrième train planétaire (PR4).

3. Boîte de vitesses multiétagée (21, 22, 23) selon la revendication 1, **caractérisée en ce que** le sixième élément de commutation (S6), lors de la commande, bloque le quatrième train planétaire (PR4) en reliant de manière solidaire en rotation deux composants parmi la roue solaire (SO4), le porte-satellites (PT4) et la couronne dentée (HO4) du quatrième train planétaire (PR4).

4. Boîte de vitesses multiétagée (7, 19, 20, 21, 22, 23) selon la revendication 1, **caractérisée en ce que** dans l'ensemble quatre rapports de marche avant et quatre rapports de marche arrière peuvent être réalisés, à chaque fois un rapport de marche avant et un rapport de marche arrière se correspondant en valeur dans leur rapport de démultiplication.

5. Boîte de vitesses multiétagée (7, 19, 20, 21, 22, 23) selon les revendications 1 et 4, **caractérisée en ce qu'**un premier rapport de marche avant peut être réalisé par actionnement du deuxième (S2) et du troisième (S3) élément de commutation, un deuxième rapport de marche avant peut être réalisé par fermeture du deuxième (S2) et du quatrième (S4) élément de commutation, un troisième rapport de marche avant peut être réalisé par actionnement du deuxième (S2) et du cinquième élément de commutation (S5), et qu'un quatrième rapport de marche avant peut être réalisé par fermeture du deuxième (S2) et du sixième (S6) élément de commutation, et **en ce qu'**un premier rapport de marche arrière peut être commuté par actionnement du premier (S1) et du troisième (S3) élément de commutation, un deuxième rapport de marche arrière peut être commuté par fermeture du premier (S1) et du quatrième (S4) élément de commutation, un troisième rapport de marche arrière peut être commuté par actionnement du premier (S1) et du cinquième (S5) élément de commutation et un quatrième rapport de marche arrière peut être commuté par fermeture du premier (S1) et du sixième (S6) élément de commutation.

6. Boîte de vitesses multiétagée (7, 19, 20, 21, 22, 23) selon l'une quelconque des revendications précédentes, **caractérisée en ce que** le premier (S1) et le deuxième (S2) élément de commutation sont chacun réalisés sous forme d'élément de commutation à engagement par correspondance de formes tandis que les éléments de commutation restants (S3 à S6) se présentent sous la forme d'éléments de commutation à engagement par force.

7. Boîte de vitesses multiétagée (7, 19, 20, 21, 22, 23) selon la revendication 1, **caractérisée en ce que** l'arbre d'entraînement (AN) et l'arbre de prise de force (AB) s'étendent l'un par rapport à l'autre avec leurs axes parallèles, de préférence coaxialement, ou de manière coudée l'un par rapport à l'autre.

8. Chaîne cinématique (1) d'un véhicule, en particulier d'un véhicule ferroviaire, comprenant une boîte de vitesses multiétagée (7) selon l'une quelconque ou plusieurs des revendications 1 à 7.

9. Chaîne cinématique (1) selon la revendication 8, **caractérisée en ce qu'**un doubleur de gamme (8) et/ou un groupe relais (9) est/sont monté(s) en amont et/ou en aval de la boîte de vitesses multiétagée (7).
